# FASCICULE DE BREVET EUROPEEN

(11) **EP 4 326 611 B1**
(45) Date de publication et mention de la délivrance du brevet: **14.05.2025**
(21) Numéro de dépôt: 22724230.2
(22) Date de dépôt: 22.04.2022
(51) Int. Cl.: B64B 1/50

(54) **AÉROSTAT CAPTIF AUTONOME AVEC DISPOSITIFS DE GÉNÉRATION ET DE CONVERSION D'ÉNERGIES DURABLES DÉCARBONÉES**
AUTONOMER GEFANGENER AEROSTAT MIT VORRICHTUNGEN ZUR ERZEUGUNG UND UMWANDLUNG NACHHALTIGER KOHLENSTOFFFREIER ENERGIE
AUTONOMOUS CAPTIVE AEROSTAT WITH DEVICES FOR GENERATING AND CONVERTING SUSTAINABLE CARBON-FREE ENERGY

(30) Priorité: 23.04.2021 FR 2104252
(43) Date de publication de la demande: 28.02.2024
(73) Titulaire: GREGORI, Guilhem, 75017 Paris (FR)
(72) Inventeur: GREGORI, Guilhem, 75017 Paris (FR)
(74) Mandataire: Degret, Jacques
(86) Numéro de dépôt international: PCT/FR2022/000037
(87) Numéro de publication internationale: WO 2022/223886

(56) Documents cités:
- WO-A1-2013/173196
- CN-A- 1 222 785
- US-A1- 2011 315 546
- US-A1- 2018 109 223

## Description

### Domaine technique de l'invention

La présente invention concerne un aérostat captif autonome comportant des dispositifs de génération, de conversion et de transport d'énergies durables décarbonées.

### Etat de la technique antérieur

Face aux problèmes des émissions d'éléments polluants d'une part, et du coût d'extraction mais également de la raréfaction des énergies fossiles d'autre part, il est actuellement recherché des nouvelles sources d'énergies renouvelables.

La Terre reçoit un rayonnement solaire formant une énergie uniformément répartie, présentant une intensité qui toutefois diminue avec la descente dans l'atmosphère, cette descente entraînant à la fois une réflexion d'une partie de cette énergie et une atténuation par un passage au travers des nuages, des gaz ou des poussières contenus dans cette atmosphère.

On sait par ailleurs qu'une montée en altitude entraîne un éloignement de l'horizon, ce qui augmente la durée d'ensoleillement journalier.

Afin de récupérer une énergie solaire en altitude, un type d'aérostat captif connu, présenté notamment par le document US-A1-2015/0053255, comporte un ballon allongé horizontalement, disposant en-dessous d'un réflecteur parabolique qui permet de réfléchir et de concentrer le rayonnement solaire vers des cellules photovoltaïques fixées sous ce ballon, afin d'optimiser la récupération d'énergie.

L'énergie est ensuite transmise par un câble électrique de liaison au sol.

Un autre type d'aérostat captif connu, présenté notamment par le document WO-A1-2016/141484 ou par le document WO-A-2013/173196, comporte une série de panneaux solaires tournés vers le ciel, reliés ensemble pour former un nuage artificiel, qui reçoivent directement le rayonnement solaire pour le transformer en énergie électrique transmise ensuite au sol par un câble de liaison.

Ces différents systèmes connus nécessitent un remplissage au sol de volumes fermés avec un gaz plus léger que l'air, soit de l'hydrogène, soit de l'hélium, afin d'assurer la station en hauteur. Toutefois, ces gaz légers comportant des molécules de très faible dimension, il s'ensuit une perte constante au travers des enveloppes les contenant.

Ainsi, si on connaît du document CN-1.222.785 A un aérostat captif autonome comportant une membrane extérieure équipée de cellules photovoltaïques de réception du rayonnement solaire complétée d'une liaison au sol comprenant un câble de transmission de l'énergie électrique produite par les cellules, ledit aérostat comportant également un volume fermé de réserve d'hydrogène destiné à assurer sa sustentation, il est à noter à cet égard que c'est à travers le câble de la liaison entre la Terre et l'aérostat, et depuis la Terre, qu'est distribué l'hydrogène nécessaire à la sustentation dudit aérostat. Pour assurer cette dernière, il faut donc stocker au sol d'importants volumes d'hydrogène, et renouveler ces stocks de temps à autre.

Cela étant, on peut chercher à optimiser l'altitude de l'aéronef avec une variation du volume du gaz de sustentation, pour réaliser une adaptation continue du meilleur compromis de production d'énergie en fonction des besoins.

Il peut alors être nécessaire de prévoir également un complément régulier de gaz, tel par exemple une alimentation par un conduit compris dans la liaison au sol comme le propose le document CN-1.222.785 A, ou par une descente périodique de l'aéronef à terre afin de compléter son volume de gaz.

Ces opérations nécessitent des installations au sol d'alimentation ou de remplissage qui occupent un espace, entraînent des manipulations, réduisent la disponibilité de l'aérostat dans l'atmosphère pour produire l'énergie, et entraînent des complications et des coûts qui affectent la rentabilité de l'installation.

Par ailleurs, si on souhaite stocker une énergie dans l'aéronef, par exemple pour conserver une énergie reçue le jour afin de la distribuer régulièrement pendant la nuit, l'utilisation de batteries pour stocker une quantité d'énergie électrique pose des problèmes de masse importante qui doit être compensée par des volumes très élevés de gaz de sustentation.

### Présentation de l'invention

La présente invention a notamment pour but d'éviter ces problèmes de l'art antérieur.

Elle propose à cet effet un aérostat captif autonome comportant un volume fermé de réserve d'hydrogène assurant la sustentation, une membrane extérieure équipée de cellules photovoltaïques de réception du rayonnement solaire, et une liaison au sol comprenant un câble de transmission de l'énergie électrique produite par les cellules, ledit aérostat captif étant remarquable en ce qu'il comporte des dispositifs de captation d'eau ou d'humidité contenue dans l'atmosphère constituant sa membrane extérieure, des moyens permettant de convertir cette eau en au moins une énergie choisie parmi l'hydrogène, l'oxygène et la chaleur, ainsi que des conduits permettant chacun de distribuer à terre une partie de l'eau captée et au moins une autre des énergies générées ou converties au sein de l'aérostat.

Très avantageusement, l'aérostat captif comporte alors un électrolyseur de l'eau captée apte à dégager du gaz hydrogène utilisé pour alimenter le volume de réserve d'hydrogène et pour alimenter également un conduit permettant de distribuer ce gaz hydrogène à terre.

Un avantage de cet aérostat est que, par les dispositifs de captation d'eau ou de vapeur d'eau contenues dans l'atmosphère, on obtient une eau qui peut de manière autonome, grâce à l'énergie électrique produite par les cellules photovoltaïques, être décomposée en oxygène et en hydrogène dans l'électrolyseur.

L'hydrogène ainsi converti peut alors être utilisé pour effectuer une alimentation complémentaire du volume fermé de stockage, qui peut être fréquente et sans interrompre la production d'énergie, afin d'optimiser en particulier la hauteur de vol de l'aérostat pour assurer la meilleure rentabilité énergétique.

De plus, on obtient de manière simple un moyen de stockage de l'énergie venant de l'électricité sous une forme gazeuse, présentant une masse très faible, qui peut être stockée dans l'aérostat ou délivrée à terre par un des conduits de distribution au sol.

L'aérostat captif selon l'invention peut comporter de plus une ou plusieurs des caractéristiques suivantes, qui peuvent être combinées entre elles.

Ainsi, l'aérostat captif pourra comporter en outre un volume fermé de stockage de gaz oxygène.

Dans ce cas, la liaison au sol comportera un conduit permettant de distribuer le gaz oxygène à terre.

Avantageusement, la liaison au sol pourra aussi comporter un conduit de descente d'air prélevé dans l'atmosphère.

Avantageusement, les dispositifs de captation d'eau ou d'humidité contenue dans l'atmosphère qui constituent la membrane extérieure comportent une matrice polymère qui peut devenir hydrophile ou hydrophobe par un changement d'état, avec une réorganisation de ses molécules suivant l'environnement extérieur.

De surcroît, la matrice polymère peut être thermosensible, en contenant un hydrogel qui avec une stimulation devient hydrophobe en provoquant une restitution sous forme liquide de l'eau captée dans cette matrice.

Encore avantageusement, la membrane extérieure peut comporter des films photovoltaïques organiques souples permettant de suivre les déformations du ballon.

Toujours avantageusement, la membrane extérieure ou la liaison au sol peut comporter des cordons avec des propriétés piézo-électriques, qui s'étirent ou se contractent suivant les déformations du ballon ou suivant l'allongement de ladite liaison au sol, en réalisant ainsi une production d'électricité.

L'aérostat captif selon l'invention comportera de préférence un système de commande automatisé mettant en œuvre un algorithme d'optimisation qui arbitrera des choix afin de satisfaire la demande en énergies, mettant en œuvre une matrice de conversion de la production et de la transformation des énergies.

Dans ce cas, avantageusement, le système de commande automatisé recevra des informations issues de dispositifs de réception de données venant de stations météorologiques

Le système de commande automatisé pourra de plus recevoir des informations issues de dispositifs de réception d'éléments mesurés par des sondes et capteurs du ballon, comprenant l'altitude, la vitesse du vent, la température, l'ensoleillement, l'hygrométrie, la composition de l'air avec une mesure des particules fines, des composés organiques, du dioxyde de carbone et de l'azote, et l'état de ses réserves d'énergies et de fluides.

Enfin, le système de commande automatisé pourra également recevoir des informations issues de dispositifs de réception d'éléments comprenant les informations des demandes des bâtiments à terre, d'éléments anticipés par l'analyse des besoins énergétiques passés relatifs à la consommation des usagers, et d'éléments déduits comprenant les moyens nécessaires pour satisfaire la demande à venir, par transformation d'énergie ou par utilisation des stocks d'énergies disponibles.

### Brève description des dessins

L'invention sera mieux comprise et d'autres caractéristiques et avantages apparaîtront plus clairement à la lecture de la description ci-après donnée à titre d'exemple, en référence aux dessins annexés dans lesquels :
[Fig.1] est un graphique général de circulation des flux dans un aérostat selon l'invention ; et
[Fig.2] est un schéma en coupe verticale de cet aérostat.

### Description des modes de réalisation préférés

Dans l'ensemble du document, les côtés supérieur et inférieur et les expressions au-dessus ou en dessous sont relatifs à un axe vertical par rapport à la terre.

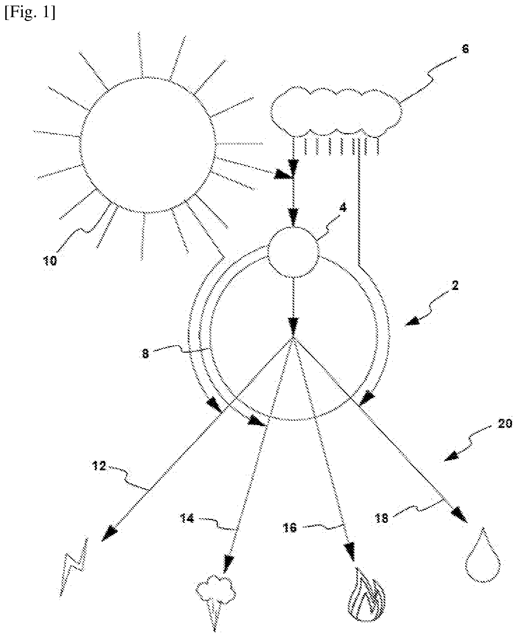

La [Fig.1] présente un aérostat conforme à l'invention formant un ballon captif 2 maintenu en altitude, comportant un volume fermé d'hydrogène de sustentation, des membranes de surface avec des dispositifs de prélèvement d'eau 4 sous forme de vapeur d'eau contenue dans l'air ou de gouttelettes provenant du brouillard ou des nuages 6, et des cellules photovoltaïques 8 produisant du courant électrique à partir du rayonnement solaire 10.

Le ballon 2 comporte différents dispositifs pour transformer et stocker les énergies, permettant d'assurer des flux le long de la liaison 20 avec le sol pour distribuer ensuite ces énergies à des usagers à terre, en particulier un courant électrique 12 et un débit d'hydrogène 16. En complément, le ballon 2 peut distribuer aux usagers des flux complémentaires comme par exemple un débit d'eau potable 18, d'air frais 14 ou de gaz oxygène.

L'hydrogène constituant une source d'énergie par combustion ou oxydation avec l'oxygène de l'air, notamment dans une pile à combustible pour produire de l'électricité, est actuellement obtenu à plus de 95% par des ressources fossiles non re nouvelables et en émettant des gaz polluants, ce procédé étant donc peu écologique.

L'hydrogène peut également être obtenu à partir d'une énergie renouvelable, appelé aussi hydrogène vert, notamment par électrolyse de l'eau.

L'hydrogène se développe pour la motorisation des véhicules. Il peut aussi être utilisé pour le chauffage de bâtiments résidentiels ou professionnels, avec toutefois des problèmes importants posés par son stockage à cause de la forte pression nécessaire pour limiter le volume des réservoirs, de la perméabilité relative des enveloppes de ces réservoirs, et de sa forte inflammabilité nécessitant des précautions importantes pour éviter des accidents.

Le transport et le stockage de l'hydrogène étant difficile, il peut être intéressant de disposer de petites productions continues d'hydrogène réparties sur un territoire, permettant d'alimenter en continu et en proportion des besoins des consommateurs disposés à proximité de ces sources, afin de limiter le stockage et le transport de ce gaz.

En particulier, l'aérostat selon l'invention délivrant au sol à la fois une énergie électrique, un débit d'hydrogène, un débit d'oxygène et de l'eau dans des proportions résultant d'une optimisation énergétique de leurs productions et d'un bilan des besoins à terre, donne une flexibilité importante permettant dans toutes les conditions d'obtenir le meilleur rendement.

En particulier avec un aérostat en hauteur, placé si nécessaire au-dessus des nuages, l'électricité et l'hydrogène disponibles tous les jours peuvent être utilisés immédiatement, par exemple pour le chauffage de bâtiments disposés à proximité de la liaison au sol, ou pour le remplissage de batteries ou de réservoirs d'hydrogène de véhicules.

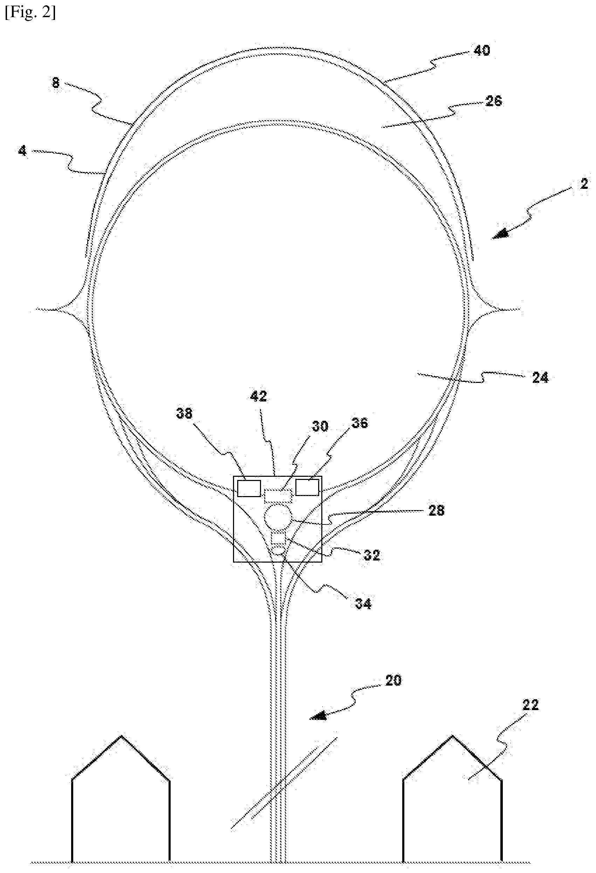

La [Fig.2] présente le ballon 2 relié à terre par une liaison au sol, liaison repérée par 20 dans son ensemble, qui est flexible, comportant un ensemble de liaisons souples comprenant un filin d'ancrage au sol et d'enroulage permettant ainsi de réguler la hauteur de l'aérostat, un câble de transmission de l'énergie électrique, des canalisations souples en polymère pour la conduite du gaz hydrogène H₂, pour la conduite du gaz oxygène O₂, pour la conduite d'eau liquide H₂O, pour le passage d'air frais, et si nécessaire des câbles de transmission de signaux utilisant des conducteurs électriques ou des fibres optiques.

La liaison au sol 20 peut contenir des cordons extensibles avec des propriétés piezoélectriques apportant aussi une production d'électricité qui est récupérée par élongation de cette liaison déformable.

Les différents câbles ou conduits de la liaison au sol 20 partent d'une nacelle 42 disposée sous le ballon, regroupant tous les éléments techniques de fonctionnement de l'aérostat. La nacelle 42 sous le ballon permet, lorsque l'aérostat est redescendu à terre, d'accéder facilement aux éléments techniques en vue de réaliser des opérations de contrôle ou de maintenance.

Le ballon 2 est maintenu à proximité de bâtiments 22 pour recevoir des consignes de pilotage de ce ballon avec ses différentes transformations d'énergie, et pour alimenter ces bâtiments en énergie. Idéalement, ce sont les toitures desdits bâtiments qui seront connectées aux différentes canalisations amenant les énergies souhaitées depuis le ballon 2, lesquelles énergies seront ensuite distribuées à partir des toitures jusqu'aux centres d'alimentation des bâtiments en énergie voulue.

Le ballon 2 sensiblement sphérique comporte un volume principal fermé de stockage d'hydrogène 24 occupant une majeure partie de la sphère, disposant d'une membrane suffisamment imperméable à ce gaz, ce qui assure la sustentation du ballon, et un volume annexe fermé de stockage d'oxygène 26 disposé au-dessus de la moitié supérieure du volume principal de stockage d'hydrogène 24.

L'ensemble du ballon 2 est couvert par une membrane extérieure 40 comportant à la fois des films photovoltaïques 8 de production du courant électrique et une surface agissant comme une éponge, surface qui est donc hydrophile afin d'absorber l'humidité ambiante présente sous forme de vapeur ou de gouttelettes, pour restituer une eau liquide qui est alors stockée dans un réservoir d'eau 28 disposé dans la nacelle 42.

Avantageusement, on utilise une membrane extérieure polymère 40 qui peut aussi devenir hydrophobe par un changement d'état, avec une réorganisation de ses molécules suivant l'environnement extérieur. En particulier, on peut utiliser à titre de membrane une matrice polymère thermosensible, contenant un hydrogel qui, avec une stimulation par le rayonnement solaire, devient hydrophobe en provoquant une restitution sous forme liquide de l'eau captée dans cette matrice. On alimente ainsi, suivant les besoins, le réservoir d'eau 28 ou la conduite de distribution d'eau à terre.

La production d'électricité par énergie solaire est de préférence aussi assurée par des films photovoltaïques organiques souples 8, appliqués en serpentin sur la membrane extérieure du ballon 2, lesquels constituent aujourd'hui une troisième génération de cellules photovoltaïques formées avec des films semi-transparents et ultra minces.

On obtient une impression et une superposition en fine couche de matériaux semi-conducteurs sur la membrane extérieure 40, celle-ci restant souple, pour suivre les déformations du ballon 2, et présentant une très grande surface bien exposée au rayonnement solaire.

De plus, les matériaux semi-conducteurs des cellules photovoltaïques 8 peuvent, en s'échauffant, agir directement sur la température de la membrane extérieure 40, pour commander directement le changement d'état de cette membrane afin d'assurer son aspect hydrophile de captation d'eau, ou son aspect hydrophobe de restitution de cette eau.

La membrane extérieure 40 est constituée de polymères souples, résistants aux rayonnements ultraviolets et au feu, comprenant avantageusement des cordons avec des propriétés piézo-électriques afin d'obtenir aussi une production d'électricité par déformation de cette membrane, complétant par conséquent celle venant des cellules photovoltaïques 8.

En particulier, les cordons piézo-électriques faisant partie intégrante de la membrane extérieure polymère 40 peuvent être des cordons qui se dilatent et se contractent de manière réversible suivant un coefficient d'allongement allant de 200 à 750%. Un filin fixé à un enrouleur peut gérer la variation d'allongement afin de produire l'énergie électrique.

La nacelle 42 comporte également avantageusement un électrolyseur 30 qui est alimenté par le réservoir d'eau 28, avec un apport d'une solution hydrosoluble acide ou basique 38 permettant de conduire le courant entre deux électrodes recevant le courant électrique produit par les films photovoltaïques 8, ceci afin de décomposer l'eau liquide en dioxygène et dihydrogène gazeux. Ces deux gaz sont alors stockés dans leurs volumes de stockage respectifs 24, 26 décrits ci-dessus.

Une pompe 36 permet si nécessaire de réguler la circulation d'eau.

Grâce au courant électrique, qu'il reçoit des films photovoltaïques, l'électrolyseur 30 ne fait en la circonstance que mettre en application le principe : 2H₂O + électricité → O₂+2H₂.

En variante, l'électrolyseur 30 peut être du type à membrane à électrolyte polymère, appelée aussi « MEP », permettant des échanges de protons entre deux compartiments recevant chacun une électrode, tout en étant imperméable au passage des gaz.

L'électrolyse de l'eau permet d'utiliser un surplus d'électricité produit par les films photovoltaïques 8, afin de transformer cette énergie en hydrogène pouvant être conservé sur place dans le volume de stockage hydrogène 24, en particulier en fonction des besoins de sustentation du ballon 2.

On envoie à terre les énergies électrique ou hydrogène suivant les demandes, pour y répondre. Le surplus d'électricité est converti en gaz hydrogène qui est stocké dans la réserve d'hydrogène.

Le gaz hydrogène est transmis à terre par la canalisation de ce gaz intégrée dans la liaison au sol 20, en particulier pour alimenter les bâtiments 22 et réaliser leur chauffage. De même, on peut envoyer à terre un surplus de gaz oxygène par la canalisation de ce gaz intégrée dans la liaison au sol 20.

De même pour l'eau récupérée en altitude, qui est purifiée par sa distillation au niveau de la membrane, un surplus de production inutilisé par l'électrolyseur 30 est envoyé au sol par la canalisation de distribution d'eau, afin de servir en particulier d'eau potable dans les bâtiments 22. On peut aussi prélever un air pur en altitude, qui est envoyé à terre par une canalisation intégrée dans la liaison au sol 20, et ce afin par exemple de renouveler l'air intérieur dans les bâtiments 22 en utilisant leurs systèmes de ventilation mécanique contrôlée.

L'aérostat comporte un système de commande automatisé 32, notamment un ordinateur de bord comprenant un tableau de commande qui met en œuvre un algorithme d'optimisation recevant de nombreuses informations de différents ensembles, et ce dans le but de pouvoir déterminer les actions à effectuer.

Ainsi, en particulier, le système de commande automatisé (32) recevra les éléments mesurés par les différents sondes et capteurs 34 du ballon 2, comprenant notamment l'altitude, la vitesse du vent, la température, l'ensoleillement, l'hygrométrie et la composition de l'air avec, en particulier, une mesure des particules fines, des composés organiques, du dioxyde de carbone et de l'azote. Bien évidemment, l'algorithme connaît aussi en permanence l'état de ses réserves d'énergies et de fluides.

Ce système de commande automatisé (32), assurant donc le lien entre la demande et l'offre, reçoit en outre un ensemble d'éléments comprenant les informations des demandes des bâtiments à terre 22, et des éléments anticipés par l'analyse des besoins énergétiques passés relatifs à la consommation des usagers. Il reçoit aussi des éléments déduits, comprenant les moyens nécessaires pour satisfaire la demande, en particulier par transformation d'énergie, ou simple utilisation des stocks d'énergies disponibles.

Le système de commande automatisé (32) est bien sûr également connecté aux stations météorologiques proches, afin d'anticiper les niveaux de précipitation et d'ensoleillement à venir.

Cet algorithme est donc l'exécutif utilisant une matrice de conversion, moyen de régularisation entre l'offre et la demande pour gérer les productions et transformations des énergies (électricité, gaz hydrogène, gaz oxygène, eau et chaleur) et calculer en permanence l'altitude de l'aérostat. Il croise et compile de manière continue les données afin d'arbitrer les choix et les orientations stratégiques.

L'aérostat selon l'invention ne nécessitant qu'une très faible surface au sol, il est particulièrement destiné aux environnements urbains denses et aux grandes villes plus polluées. Il peut aussi convenir pour des constructions anciennes avec une forte valeur architecturale, historique ou financière, mais présentant paradoxalement un bilan énergétique médiocre avec des fortes déperditions d'énergie et des difficultés d'adaptation aux technologies modernes de préservation de l'énergie.

L'aérostat est particulièrement adapté à une fabrication industrielle en série, permettant ainsi de réduire les coûts de fabrication, notamment ceux de ses éléments fortement techniques comme par exemple la membrane extérieure.

## Revendications

1. Aérostat captif autonome (2) comportant un volume fermé de réserve d'hydrogène (24) assurant la sustentation, une membrane extérieure (40) équipée de cellules photovoltaïques (8) de réception du rayonnement solaire, et une liaison au sol (20) comprenant un câble de transmission de l'énergie électrique produite par les cellules (8), **caractérisé en ce qu'**il comporte des dispositifs (4) de captation d'eau ou d'humidité contenue dans l'atmosphère constituant sa membrane extérieure (40), des moyens permettant de convertir cette eau en au moins une énergie choisie parmi l'hydrogène, l'oxygène et la chaleur, ainsi que des conduits permettant chacun de distribuer à terre une partie de l'eau captée et au moins une autre des énergies générées ou converties au sein de l'aérostat.

2. Aérostat captif selon la revendication 1, **caractérisé en ce qu'**il comporte un électrolyseur (30) de l'eau captée apte à dégager du gaz hydrogène utilisé pour alimenter le volume de réserve d'hydrogène (24) ainsi qu'un conduit permettant de distribuer ce gaz hydrogène à terre.

3. Aérostat captif selon la revendication 1, **caractérisé en ce qu'**il comporte également un volume fermé de stockage de gaz oxygène (26).

4. Aérostat captif selon la revendication 3, **caractérisé en ce que** la liaison au sol (20) comporte un conduit permettant de distribuer le gaz oxygène à terre.

5. Aérostat captif selon l'une quelconque des revendications précédentes, **caractérisé en ce que** la liaison au sol (20) comporte un conduit de descente d'air prélevé dans l'atmosphère.

6. Aérostat captif selon la revendication 1, **caractérisé en ce que** les dispositifs (4) de captation d'eau ou d'humidité contenue dans l'atmosphère comportent une matrice polymère qui peut devenir hydrophile ou hydrophobe par un changement d'état, avec une réorganisation de ses molécules suivant l'environnement extérieur.

7. Aérostat captif selon la revendication 6, **caractérisé en ce que** la matrice polymère est thermosensible et contient un hydrogel qui avec une stimulation devient hydrophobe en provoquant une restitution sous forme liquide de l'eau captée dans cette matrice.

8. Aérostat captif selon l'une quelconque des revendications 5 à 7, **caractérisé en ce que** la membrane extérieure (40) comporte des films photovoltaïques organiques souples (8) permettant de suivre les déformations du ballon (2).

9. Aérostat captif selon l'une quelconque des revendications 5 à 8, **caractérisé en ce que** la membrane extérieure (40) ou la liaison au sol (20) comporte des cordons avec des propriétés piézo-électriques, qui s'étirent ou se contractent suivant les déformations du ballon (2) ou suivant l'allongement de ladite liaison (20) en réalisant ainsi une production d'électricité.

10. Aérostat captif selon l'une quelconque des revendications précédentes, **caractérisé en ce qu'**il comporte un système de commande automatisé (32) mettant en œuvre un algorithme d'optimisation qui arbitre des choix afin de satisfaire la demande en énergies, mettant en œuvre une matrice de conversion de la production et de la transformation des énergies.

11. Aérostat captif selon la revendication 10, **caractérisé en ce que** le système de commande automatisé (32) comporte des dispositifs de réception de données venant de stations météorologiques.

12. Aérostat captif selon la revendication 10 ou 11, **caractérisé en ce que** le système de commande automatisé (32) comporte des dispositifs de réception d'éléments mesurés par des sondes et capteurs (34) du ballon (2), comprenant l'altitude, la vitesse du vent, la température, l'ensoleillement, l'hygrométrie, la composition de l'air avec une mesure des particules fines, des composés organiques, du dioxyde de carbone et de l'azote, et l'état de ses réserves d'énergies et de fluides.

13. Aérostat captif selon l'une quelconque des revendications 10 à 12, caractérisé en ce le système de commande automatisé (32) comporte des dispositifs de réception d'éléments comprenant les informations des demandes des bâtiments à terre (22), d'éléments anticipés par l'analyse des besoins énergétiques passés relatifs à la consommation des usagers, et d'éléments déduits comprenant les moyens nécessaires pour satisfaire la demande à venir, par transformation d'énergie ou par utilisation des stocks d'énergies disponibles.

## Patentansprüche

1. Autonomer gefangener Aerostat (2) mit einem geschlossenen Wasserstoffspeicher-Volumen (24), das den Auftrieb sicherstellt, einer Außenhaut (40), die mit Photovoltaikzellen (8) versehen ist, zur Aufnahme von Sonnenstrahlung, und einer Verbindung zum Boden (20), die ein Kabel zur Übertragung elektrischer Energie aufweist, die von den Zellen (8) erzeugt wurde, **dadurch gekennzeichnet, dass** er Vorrichtungen (4) zum Einfangen von Wasser oder Feuchtigkeit aufweist, welche in der Atmosphäre enthalten sind, welche seine Außenhaut (40) bilden, wobei Mittel ermöglichen, dieses Wasser wenigstens in eine Energie gewählt aus Wasserstoff, Sauerstoff und der Wärme umzuwandeln, sowie Leitungen aufweist, von denen jede ermöglicht, auf der Erde einen Teil des eingefangenen Wassers und wenigstens eine der Energien, die innerhalb des Aerostats erzeugt oder umgewandelt wurden, zu verteilen.

2. Gefangener Aerostat nach Anspruch 1, **dadurch gekennzeichnet, dass** er eine Elektrolysevorrichtung (30) des eingefangenen Wassers aufweist, die in der Lage ist, Wasserstoffgas freizusetzen, das verwendet wird, das Wasserstoffspeicher-Volumen (24) zu speisen, sowie eine Leitung aufweist, die ermöglicht, das Wasserstoffgas auf der Erde zu verteilen.

3. Gefangener Aerostat nach Anspruch 1, **dadurch gekennzeichnet, dass** er ebenfalls ein geschlossenes Speichervolumen (26) von Sauerstoffgas aufweist.

4. Gefangener Aerostat nach Anspruch 3, **dadurch gekennzeichnet, dass** die Verbindung zum Boden (20) eine Leitung aufweist, die ermöglicht, das Sauerstoffgas auf der Erde zu verteilen.

5. Gefangener Aerostat nach einem der vorangehenden Ansprüche, **dadurch gekennzeichnet, dass** die Verbindung zum Boden (20) eine Abführleitung von Luft aufweist, die der Atmosphäre entnommen wurde.

6. Gefangener Aerostat nach Anspruch 1, **dadurch gekennzeichnet, dass** die Vorrichtungen (4) zum Einfangen von Wasser oder Feuchtigkeit enthalten in der Atmosphäre eine Polymermatrix aufweist, die hydrophil oder hydrophob werden kann durch eine Zustandsänderung, mit einer Reorganisation ihrer Moleküle gemäß der Außenumgebung.

7. Gefangener Aerostat nach Anspruch 6, **dadurch gekennzeichnet, dass** die Polymermatrix wärmeempfindlich ist und ein Hydrogel enthält, das mit einer Stimulation hydrophob wird, unter Hervorrufen einer Wiederbildung in flüssiger Form von Wasser, das in dieser Matrix gefangen ist.

8. Gefangener Aerostat nach einem der Ansprüche 5 bis 7, **dadurch gekennzeichnet, dass** die Außenhaut (40) weiche organische Photovoltaikfilme (8) aufweist, die ermöglichen den Verformungen des Ballons (2) zu folgen.

9. Gefangener Aerostat nach einem der Ansprüche 5 bis 8, **dadurch gekennzeichnet, dass** die Außenhaut (40) oder die Verbindung zum Boden (20) Litzen mit piezo-elektrischen Eigenschaften aufweist, die sich längen oder zusammenziehen entsprechend den Verformungen des Ballons (2) oder der Streckung der Verbindung (20), wodurch somit eine Stromerzeugung verwirklicht wird.

10. Gefangener Aerostat nach einem der vorangehenden Ansprüche, **dadurch gekennzeichnet, dass** er ein automatisiertes Steuersystem (32) aufweist, das einen Optimierungsalgorithmus operativ umsetzt, der über Auswahl entscheidet, um die Energieanforderungen zu befriedigen, wobei er eine Matrix der Energieerzeugung und -übertragung operativ umsetzt.

11. Gefangener Aerostat nach Anspruch 10, **dadurch gekennzeichnet, dass** das automatisierte Steuersystem (32) Empfangsvorrichtungen von Daten aufweist, die von Wetterstationen kommen.

12. Gefangener Aerostat nach Anspruch 10 oder 11, **dadurch gekennzeichnet, dass** das automatisierte Steuersystem (32) Empfangsvorrichtungen von Elementen aufweist, die von Sonden und Aufnehmern (34) des Ballons (2) gemessen werden, umfassend die Höhe, die Windgeschwindigkeit, die Temperatur, die Sonnenbestrahlung, die Luftfeuchtigkeit, die Luftzusammensetzung mit einer Messung von Feinstaub, organischer Komponenten, Kohlendioxid, Stickstoffdioxid und den Zustand seiner Energiereserven und Fluide.

13. Gefangener Aerostat nach einem der Ansprüche 10 bis 12, **dadurch gekennzeichnet, dass** das automatisierte Steuersystem (32) Empfangsvorrichtungen von Elementen aufweist, umfassend die Nachfrageinformationen der Gebäude am Boden (22), von Elementen, angenommen durch die Analyse der vergangenen Energieverbräuche, bezogen auf den Verbrauch der Nutzer, und hergeleiteten Elementen, umfassend die notwendigen Mittel, um die zukünftige Nachfrage zufriedenzustellen, durch Energieumwandlung oder durch Verwendung vorhandener Energiespeicher.

## Claims

1. An autonomous captive aerostat (2) comprising a closed hydrogen-reservoir volume (24) providing lift, an outer membrane (40) equipped with photovoltaic cells (8) for receiving solar radiation, and a ground tether (20) comprising a cable for transmitting the electrical energy produced by the cells (8), **characterised in that** it comprises devices (4) for capturing water or moisture contained in the atmosphere constituting its outer membrane (40), means enabling this water to be converted into at least one form of energy selected from hydrogen, oxygen and heat, and pipes each enabling some of the captured water and at least one other of the forms of energy generated or converted within the aerostat to be distributed to the ground.

2. A captive aerostat according to claim 1, **characterised in that** it comprises an electrolyser (30) for the captured water capable of releasing hydrogen gas used to supply the hydrogen-reservoir volume (24) as well as a pipe for distributing this hydrogen gas to the ground.

3. A captive aerostat according to claim 1, **characterised in that** it also comprises a closed oxygen gas-reservoir volume (26).

4. A captive aerostat as claimed in claim 3, **characterised in that** the ground tether (20) comprises a pipe for distributing oxygen gas to the ground.

5. A captive aerostat according to any one of the preceding claims, **characterised in that** the ground tether (20) comprises a pipe for bringing down air taken from the atmosphere.

6. A captive aerostat according to claim 1, **characterised in that** the devices (4) for capturing water or moisture contained in the atmosphere comprise a polymer matrix which can become hydrophilic or hydrophobic by a change of state, with a reorganization of its molecules depending on the external environment.

7. A captive aerostat according to claim 6, **characterised in that** the polymer matrix is thermosensitive, containing a hydrogel which, when stimulated, becomes hydrophobic, causing the water captured in this matrix to be released in liquid form.

8. A captive aerostat according to any one of claims 5 to 7, **characterised in that** the outer membrane (40) comprises flexible organic photovoltaic films (8) making it possible to follow the deformations of the aerostat (2).

9. A captive aerostat according to any one of claims 5 to 8, **characterised in that** the outer membrane (40) or the ground tether (20) comprises cords with piezoelectric properties, which stretch or contract according to the deformations of the aerostat (2) or according to the elongation of said ground tether (20), thereby producing electricity.

10. A captive aerostat according to any one of the preceding claims, **characterised in that** it comprises an automated control system (32) implementing an optimisation algorithm which can make choices to suit the demand in energies, implementing a conversion matrix for production and transformation of the energies.

11. A captive aerostat according to claim 10, **characterised in that** the automated control system (32) comprises devices adapted for receiving data from weather stations.

12. A captive aerostat according to claim 10 or 11, **characterised in that** the automated control system (32) comprises devices adapted for receiving elements measured by probes and sensors (34) of the aerostat (2), comprising the altitude, wind speed, temperature, sunshine, hygrometry, composition of the air with a measurement of fine particles, organic compounds, carbon dioxide and nitrogen, and the state of its reserves in energies and fluids.

13. A captive aerostat according to any one of claims 10 to 12, **characterised in that** the automated control system (32) comprises devices adapted for receiving elements comprising information about the demands from buildings on the ground (22), elements anticipated by analysing past energy needs relating to user consumption, and deduced elements comprising the means necessary to satisfy future demand, by transforming energy or by using available energy stocks.
